Europäisches Patentamt

European Patent Office

Office européen des brevets

(11) Publication number: **0 260 755**
**A1**

## (12) EUROPEAN PATENT APPLICATION

(21) Application number: 87201733.0

(22) Date of filing: 10.09.87

(51) Int. Cl.⁴: **A01D 45/22** , B07B 4/02

(30) Priority: 17.09.86 NL 8602354

(43) Date of publication of application:
23.03.88 Bulletin 88/12

(84) Designated Contracting States:
AT BE CH DE ES FR GB GR IT LI LU NL SE

(71) Applicant: **Meijer, Thomas Harke Daniel**
**Stadsweg 123**
**NL-9792 RE Ten Post(NL)**

(72) Inventor: **Meijer, Thomas Harke Daniel**
**Stadsweg 123**
**NL-9792 RE Ten Post(NL)**

(74) Representative: **van der Veken, Johannes**
**Adriaan et al**
**EXTERPATENT B.V. Willem Witsenplein 4**
**NL-2596 BK 's-Gravenhage(NL)**

(54) Method and apparatus for separating lighter and heavier components in a mixture by means of a current of air, and a picking machine provided with such an apparatus.

(57) An apparatus for separating lighter and heavier components in a mixture by means of a current of air comprises a chamber (2) in which the separation takes place. The chamber is provided with a mixture feed opening (3), a removal opening (5) for the lighter components and a removal opening (6) for the heavier components. The chamber (2) is further provided with a blow air feed opening (8) in the lowermost part of its side wall (4). The side wall (9) of the chamber (2) situated opposite the blow air feed opening (8) is curved in vertical direction, the concave side of said side wall being directed towards the blow air feed opening. This makes it possible to produce a turbulence in the current of air whereby a very good separation of the lighter and heavier components is achieved.

FIG:1.

# METHOD AND APPARATUS FOR SEPARATING LIGHTER AND HEAVIER COMPONENTS IN A MIXTURE BY MEANS OF A CURRENT OF AIR, AND A PICKING MACHINE PROVIDED WITH SUCH AN APPARATUS.

## BACKGROUND OF THE INVENTION.

The invention relates to a method for separating lighter and heavier components in a mixture by means of a current of air, the mixture being fed into a chamber via a mixture feed opening disposed at the top of the chamber, a current of air directed upwards being produced in the chamber, as a result of which at least a portion of the lighter components are entrained and are removed at the top of the chamber and the heavier components which fall downwards are removed at the bottom of the chamber.

Such a method is known and is, for example, used in a bean-picking machine. In such a machine, beans and leaf are picked at the same time from the bean bush and then conveyed together to the chamber where the separation of beans and leaf takes place. The leaf, which is the lighter component of the mixture, is largely entrained by the current of air and removed. The current of air is produced by a powerful suction fan which extracts air from the chamber at the top of the chamber. The beans which fall downwards - the heavier components of the mixture - are removed at the bottom of the chamber by means of a conveyor belt.

The known method has, however, the disadvantage that the lighter and heavier components are inadequately separated from each other. If the current of air directed upwards is inadequate, a portion of the lighter components will not be entrained by said current of air, but will fall downwards in the chamber together with the heavier components. This problem can be eliminated by producing a stronger current of air, but this has in turn the drawback that a certain portion of the heavier components will be entrained by the current of air directed upwards and will be removed at the top of the chamber.

## SUMMARY OF THE INVENTION.

The object of the invention is therefore to provide a method for separating lighter and heavier components in a mixture by means of a current of air, a much better separation between the said components being produced than in the known method.

According to the invention, this object is achieved by a method of the above mentioned type which is characterized in that, at the bottom of the chamber, an auxiliary current of air is produced which is guided first essentially in a horizontal direction and then in an upward direction through the chamber, as a result of which any lighter components which fall downwards are separated from the heavier components which fall downwards and are removed upwards.

By this method it is achieved that, without an extra strong main current of air directed upwards having to be produced, virtually all the lighter components are nevertheless removed upwards and virtually all the heavier components fall downwards and consequently a very good separation of lighter and heavier components is achieved.

Expediently, turbulence is produced in the auxiliary current of air in the chamber in the vertical direction. As a result of this, the components falling downwards remain suspended for a longer time, which promotes the separation of lighter and heavier components.

The invention also relates to an apparatus for separating lighter and heavier components in a mixture by means of a current of air, comprising a chamber provided with a mixture feed opening in the uppermost part of a side wall of the chamber, a removal opening for the lighter components at the top of the chamber and a removal opening for the heavier components at the bottom of the chamber, which apparatus is characterized in that it is also provided with a blow air feed opening in the lowermost part of a side wall of the chamber and in that the side wall of the chamber situated opposite said blow air feed opening is curved in the vertical direction, the concave side of said side wall being directed towards the blow air feed opening. With said apparatus it is possible in a simple manner to produce turbulence in the auxiliary current of air in the chamber in the vertical direction and to separate any lighter components which fall downwards from the heavier components which fall downwards.

Preferably the blow air feed opening is disposed beneath the feed opening for the mixture. This has the advantage that the auxiliary current of air deflected by the curved side wall collides with the mixture of lighter and heavier components which is fed into the chamber. As a result of this an extra strong turbulence is produced in the chamber, which promotes the separation of lighter and heavier components.

In order to influence the direction of the auxiliary current of air entering the chamber via the blow air feed opening, a flap which is rotatable about a horizontal spindle can be disposed at the position of the blow air feed opening. As a result of this, the direction of the auxiliary current of air can be optimally adjusted.

In a certain advantageous embodiment of the appa ratuu according to the invention, the floor of the chamber is formed by a perforated conveyor belt and the blow air feed opening is situated partially below and partially above the conveyor belt. Due to this, a portion of the auxiliary current of air can be guided upwards through the perforated conveyor belt from underneath, as a result of which lighter components which nevertheless still land on the conveyor belt are lifted off the conveyor belt and are entrained by the auxiliary current of air directed essentially horizontally.

Finally, the invention relates to a picking machine which is provided with the apparatus according to the invention described above.

The invention will now be explained by describing an exemplary embodiment with reference to the accompanying drawings.

## BRIEF DESCRIPTION OF THE DRAWINGS.

Figure 1 is a diagrammatic section of an apparatus according to the invention,

Figure 2 is a view of the apparatus of Figure 1 along the line II-II,

Figure 3 shows a variant of the apparatus of Figure 1, and

Figure 4 is a diagrammatic illustration of a bean-picking machine which is equipped with the apparatus according to the invention.

## DETAILED DESCRIPTION OF THE PREFERRED EMBODIMENTS.

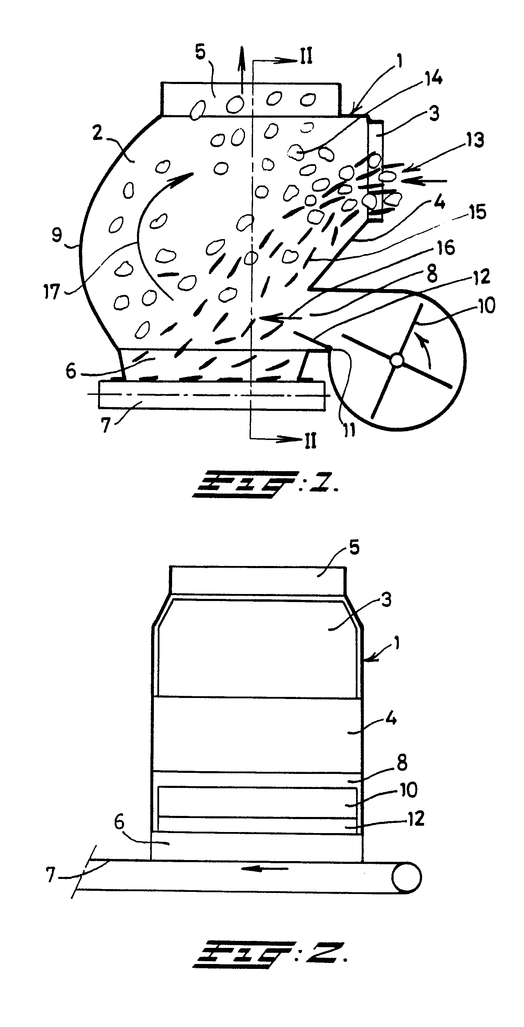

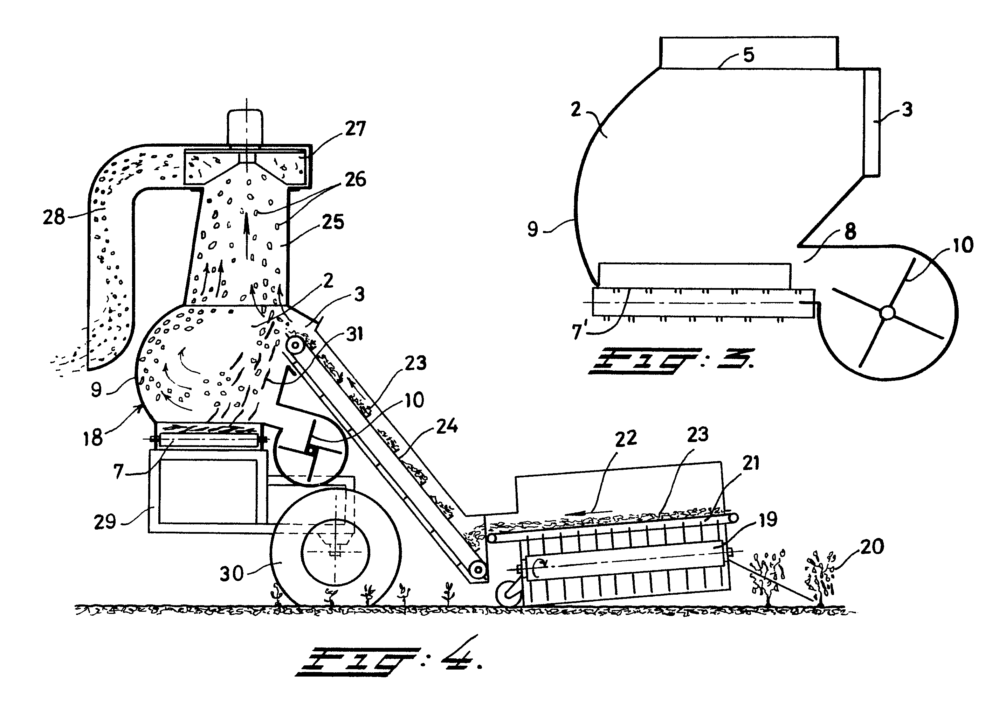

The apparatus shown in Figures 1 and 2 for separating lighter and heavier components in a mixture by means of a current of air comprises a chamber 2 bounded by a housing 1 having an essentially rectangular form when viewed from above. The chamber is provided with feed opening 3 for the mixture, which opening is disposed in the uppermost part of the side wall 4 of the chamber. Furthermore, a removal opening 5 for the lighter components is disposed at the top of the chamber 2 and a removal opening 6 for the heavier components at the bottom of the chamber 2. Below the removal opening 6 there is a conveyor belt 7 for the further removal of the heavier components falling out of the removal opening 6.

A blow air feed opening 8 is disposed in the lowermost part of the side wall 4 below the mixture feed opening 3. The side wall 9 of the chamber situated opposite said blow air feed opening 8 is curved in the vertical direction, the concave side of the wall 9 being directed towards the blow air feed opening 8. Connected to the blow air feed opening 8 is a blower fan 10. Furthermore, a flap 12 which is rotatable about a horizontal spindle 11 is disposed in the blow air feed opening 8.

The operation of the apparatus is as follows. A mixture 13 of lighter components 14 and heavier components 15 is fed into the chamber 2 via the mixture feed opening 3. A current of air directed upwards and passing through the feed opening 5 is produced, for example, by means of a suction fan which is disposed in a removal duct connected to the removal opening 5, in the chamber 2. As a result of said current of air directed upwards, at least a portion of the lighter components 14 are removed directly to the top of the chamber 2 via the removal opening 5. The heavier components 15 fall downwards and come to rest on the conveyor belt 7 via the removal opening 6. The heavier components are further removed by means of said conveyor belt. The abovementioned current of air is, however, not capable of entraining all the lighter components 14 and a portion of the lighter components will fall downwards together with the heavier components 15. In order also to separate said lighter components from the heavier components, an auxiliary current of air is produced at the bottom of the chamber 2 by means of the blower fan 10 connected to the blow air feed opening 8. Said auxiliary current of air is guided through the chamber 2 first essentially in the horizontal direction indicated by the arrow 16 and then in the upward direction indicated by the arrow 17. Said deflection of the auxiliary current of air is brought about by the curved side wall 9 of the chamber 2 situated opposite the blow air feed opening 8. Turbulence is also produced in the auxiliary current of air in the chamber in the vertical direction by this deflection. The lighter components which fall downwards are separated from the heavier components by the auxiliary current of air and are removed upwards, where they are entrained by the abovementioned, upwards directed main current of air and removed.

In this manner, a very good separation of lighter and heavier components is brought about which cannot be achieved without using the auxiliary current of air.

Figure 3 shows an embodiment of the separation apparatus according to the invention in which the floor of the chamber 2 is formed by a perforated conveyor belt 7' and the blow air feed opening 8 for the auxiliary current of air is partially below and partially above the conveyor belt 7'. As

a result of this it is possible that lighter components which may come to rest on the conveyor belt and lifted off the conveyor belt by means of a portion of the auxiliary current of air which is passed upwards through the perforated conveyor belt from below and then are entrained by the other portion of the essentially horizontally directed auxiliary current of air and finally are removed upwards.

Figure 4 shows diagrammatically a bean-picking machine which is provided with a separation apparatus according to the invention. The separation apparatus according to the invention is indicated in Figure 4 in general by the reference numeral 18. The bean-picking machine comprises, furthermore, a picking drum 19 for picking the beans and leaf from the bean stalks 20, a conveyor belt 21 for conveying the bean-leaf mixture 23 in the direction 22, an elevator belt 24 for conveying the bean-leaf mixture 23 to the mixture feed opening 3 of the separation apparatus 18, a removal duct 25 disposed above the separation apparatus 18 for the leaf 26, which removal duct is provided at the top with a suction fan 27 to which a removal pipe is connected on the other side. The whole is supported by a chassis 29 which rests on wheels 30. The chassis 29 can be connected to a threepoint hitch of a tractor.

The mixture of leaf and beans collected by the picking drum 19 is fed via the conveyor belts 21 and 24 and the mixture feed opening 3 into the chamber 2 of the separation apparatus 18. As a result of the current of air produced by the suction fan 27, a portion of the leaf is immediately entrained and removed directly via the removal duct 25, the suction fan 27 and the removal pipe 28. The beans 31 fall downwards and are removed by the conveyor belt 7. The leaf falling downwards together with the beans is blown away essentially in the horizontal direction by the auxiliary current of air produced by the blower fan 10 and guided upwards via the curved side wall 9 and then entrained by the upwards directed main current of air and removed via the removal duct 25.

In the exemplary embodiment, the separation apparatus according to the invention is applied to a bean-picking machine. The invention is not, however, limited thereto. The separation apparatus can also be used in machines for picking fruit such as raspbarries and grapes in which leaf has to be separated from fruit, in machines in which chaff and grain have to be separated, machines for separating plastic waste which contains heavier and lighter components, and in general in machines in which a product mixture has to be cleaned by means of a current of air.

## Claims

1. Method for separating lighter and heavier components in a mixture by means of a current of air, the mixture being fed into a chamber (2) via a mixture feed opening (3) disposed at the top of the chamber, a current of air directed upwards being produced in the chamber, as a result of which at least a portion of the lighter components are entrained and are removed at the top of the chamber and the heavier components which fall downwards are removed at the bottom of the chamber, characterized in that, at the bottom of the chamber (2), an auxiliary current of air is produced which is guided first essentially in a horizontal direction and then in an upward direction through the chamber (2) as a result of which any lighter components which fall downwards are separated from the heavier components which fall downwards and are removed upwards.

2. Method according to Claim 2, characterized in that turbulence is produced in the auxiliary current of air in the chamber in the vertical direction.

3. Apparatus for separating lighter and heavier components in a mixture by means of a current of air, comprising a chamber (2) provided with a mixture feed opening (3) in the uppermost part of a side wall of the chamber, a removal opening (5) for the lighter components at the top of the chamber and a removal opening (6) for the heavier components at the bottom of the chamber, characterized in that the apparatus is also provided with a blow air feed opening (8) in the lowermost part of a side wall (4) of the chamber (2) and in that a side wall (9) of the chamber (2) situated opposite said blow air feed opening (8) is curved in the vertical direction, the concave side of said side wall (9) being directed towards the blow air feed opening (8).

4. Apparatus according to Claim 3, characterized in that the blow air feed opening (8) is located be low the feed opening (3) for the mixture (13).

5. Apparatus according to Claim 3 or 4, characterized in that a flap (9) which is rotatable about a horizontal spindle is disposed at the position of the blow air feed opening (8) in order to influence the direction of the auxiliary current of air entering the chamber (2) via the blow air feed opening (8).

6. Apparatus according to Claims 3-5, characterized in that the floor of the chamber (2) is formed by a perforated conveyor belt (7') and the blow air feed opening (8) is situated partially below and partially above the conveyor belt (7').

7. Picking machine provided with an apparatus according to one or more of the Claim 3-6.

0 260 755

FIG:1.

FIG:2.

Fig. 3.

Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 115 924 (CLAAS) <br> * Whole document * | 1,4,7 | A 01 D 45/22 <br> B 07 B 4/02 |
| Y | | 3 | |
| A | | 2,5,6 | |
| | --- | | |
| Y | NL-A-7 513 666 (PLOEGER) <br> * Page 6, lines 25-30 * | 3 | |
| | --- | | |
| X | DE-A-3 429 204 (CLAAS) <br> * Page 5, line 1 - page 6, line 2 * | 1,4,7 | |
| A | | 2,3,6 | |
| | --- | | |
| A | FR-A-2 404 386 (SUTARSKI) <br> * Claim 2 * | 5 | |
| | --- | | |
| A | DE-A-2 527 000 (ROSSIE) <br> * Whole document * | 1-4,6 | |
| | --- | | |
| A | US-A-3 769 988 (BURENGA) | | |
| | --- | | |
| A | FR-A-2 146 036 (HERBORT) | | TECHNICAL FIELDS SEARCHED (Int. Cl.4) |
| | --- | | |
| A | DE-A-3 240 423 (TAUSCHER) | | A 01 D <br> B 07 B |
| | ----- | | |

The present search report has been drawn up for all claims

| Place of search | Date of completion of the search | Examiner |
|---|---|---|
| THE HAGUE | 24-11-1987 | DE LAMEILLIEURE D. |